# EUROPEAN PATENT APPLICATION

(11) **EP 2 878 512 A1**
(43) Date of publication of application: **03.06.2015**
(21) Application number: 13823423.2
(22) Date of filing: 08.02.2013
(51) Int. Cl.: B62B 9/10, B62B 7/00, A47D 13/00

(54) **CHILD SEAT BAG AND CHILD STROLLER**

(30) Priority: 24.07.2012 CN 201220360277 U
(71) Applicant: Goodbaby Child Products Co., Ltd., Kunshan, Jiangsu 215331 (CN)
(72) Inventor: HU, Jie, Kunshan Jiangsu 215331 (CN)
(74) Representative: De Vries & Metman
(86) International application number: PCT/CN2013/071552
(87) International publication number: WO 2014/015671

(57) **Abstract**

The invention discloses a seat pocket assembly comprising a seat pocket frame and a locking mechanism. The seat pocket frame comprises a frame, and the frame comprises a left lower bracket at a left side thereof, a left upper bracket with one end being roatably connected with one end of the left lower bracket by a left first shaft, a right lower bracket at a right side thereof, and a right upper bracket with one end being rotatably connected with one end of the right lower bracket by a right first shaft. The other end of the left lower bracket is rotatably connected with the other end of the right lower bracket, the other end of the left upper bracket is rotatably connected with the other end of the right upper bracket, and the axes of the left first shaft and the right first shaft respectively extend in a left-right direction. The left lower bracket and the left upper bracket can rotate around a left first shaft to draw close to each other, the right lower bracket and the right upper bracket can rotate around a right first shaft to draw close to each other, such that the dimension of the seat pocket assembly becomes smaller in a front-rear direction, thereby allowing the left first shaft and the right first shaft to draw close to each other, such that the dimension of the seat pocket assembly becomes smaller in a left-right direction. Thus, the volume of the seat pocket assembly after folding becomes smaller, and this will lead to the easy storage and transport of the seat pocket assembly.

## Description

### Field of the Invention

The present invention relates to a seat pocket assembly and a baby carriage using the seat pocket assembly.

### Description of the Related Art

As disclosed in the patent documents of publication No. CN2739059, a seat pocket assembly of a baby carriage generally comprises a frame, a seat plate, a pedal assembly with a front end being rotatably connected to a front end of the frame and a rear end being rotatably connected to a front end of the seat plate, a first backrest frame with a front end being rotatably connected to a rear end of the seat plate, a second backrest frame with one end being rotatably connected to a rear end of the first backrest frame and the other end being rotatably connected to a rear end of the frame, as well as a frame support rod with two ends respectively being rotatably connected to the seat plate and the frame. The pedal assembly comprises a pedal and a pedal connecting frame which are connected with each other in a folding way.

In another type of seat pocket, as disclosed in the patent documents of publication No. CN102078106A, a frame comprises a first enclosure frame and a second enclosure frame which correspondingly connect to form a closed frame. Each of the first enclosure frame and the second enclosure frame comprises two side rods at a left and right sides thereof and two cross-bars rotatably connected between the two side rods, and the two cross-bars are rotatably connected with each other, such that each enclosure frame can be transversely folded in a left-right direction by means of such a four-link mechanism, and the side rods at the left and right sides of the first enclosure frame and the side rods at the left and right sides of the second enclosure frame are rotatably connected with each other respectively and correspondingly, so that the frame can be longitudinally folded in a front-rear direction.

### Summary of the Invention

A technical problem to be solved by the invention is to provide a foldable seat pocket assembly with a few components, as well as a baby carriage utilizing such a seat pocket assembly.

In order to solve the above problem, the following technical solution is utilized in the invention.

In one aspect, the invention provides a seat pocket assembly comprising a foldable seat pocket frame, a seat cloth cover disposed on the seat pocket frame, and a locking mechanism for locking the seat pocket frame when it is unfolded. The seat pocket frame comprises a frame which forms a closed frame-shaped structure when the seat pocket frame is unfolded. The frame comprises: a left lower bracket at a left side of the frame, which has a proximal end and a distal end; a left upper bracket at the left side of the frame, which has a proximal end and a distal end; a right lower bracket at a right side of the frame, which has a proximal end and a distal end; and a right upper bracket at the right side of the frame, which has a proximal end and a distal end. The proximal end of the left upper bracket is rotatably connected with the proximal end of the left lower bracket by a left first shaft, the proximal end of the right upper bracket is rotatably connected with the proximal end of the right lower bracket by a right first shaft, the distal end of the left lower bracket is rotatably connected with the distal end of the right lower bracket, and the distal end of the left upper bracket is rotatably connected with the distal end of the right upper bracket directly or undirectly. The axis of the left first shaft and the axis of the right first axis respectively extend in a left-right direction. When the seat pocket frame is folded, the distal ends of the left lower bracket and the left upper bracket draw close to each other, the distal ends of the right lower bracket and the right upper bracket draw close to each other, and the left first shaft and the right first shaft draw close to each other.

In some embodiments, the axis of the left first shaft and the axis of the right fist shaft coincide.

In some embodiments, the distal end of the left lower bracket is rotatably connected with the distal end of the right lower bracket by a second shaft, and the left first shaft and the right first shaft respectively are spatially perpendicular to the second shaft.

In some embodiments, the frame also comprises an upper connecting member, the distal end of the left upper bracket is rotatably connected with one end of the upper connecting member by a third shaft, the distal end of the right upper bracket is rotatably connected with the other end of the upper connecting member by a fourth shaft, and left first shaft and the right first shaft respectively are spatially perpendicular to the third shaft and the fourth shaft.

In some embodiments, the seat pocket frame further comprises a left seat rod with one end being fixed on the left lower bracket and a right seat rod with one end being fixed on the right lower bracket, when the seat pocket frame is unfolded, the left seat rod extends backwards from the left lower bracket and the right seat rod extends backwards from the right lower bracket.

In some further embodiments, the seat cloth cover comprises a seat portion located on the left seat rod and the right seat rod.

In some embodiments, the locking mechanism comprises a left locking mechanism arranged on the proximal end of the left lower bracket and the proximal end of the left upper bracket, and a right locking mechanism arranged on the proximal end of the right lower bracket and the proximal end of the right upper bracket.

In another aspect, the invention provides a baby carriage using the above seat pocket assembly, the baby carriage also comprises a carriage frame and a plurality of wheel assemblies arranged at the bottom of the carriage frame, and the seat pocket assembly is detachably disposed on the carriage frame.

The scope of the invention is not limited to the technical solutions particularly combined by the abovementioned technical features, other technical solutions discretionarily combined by the above-mentioned technical features or equivalent features should also be covered in the present invention. For example, the technical solutions formed by exchanging the aforementioned features with the technical features having the similar functions, including but no limited to, disclosed in the invention.

Due to the above technical solution, the present invention has the following advantages as compared with the prior art: the invention provides a seat pocket assembly with a new folding conception, in such a seat pocket assembly, the left lower bracket and the left upper bracket can rotate around a left first shaft to draw close to each other, the right lower bracket and the right upper bracket can rotate around a right first shaft to draw close to each other, such that the dimension of the seat pocket assembly becomes smaller in a front-rear direction, thereby allowing the left first shaft and the right first shaft to draw close to each other, such that the dimension of seat pocket assembly becomes smaller in a left-right direction. Thus, the volume of the seat pocket assembly after folding becomes smaller, and this will lead to the easy storage and transport of the seat pocket assembly.

### Brief Description of the Drawings

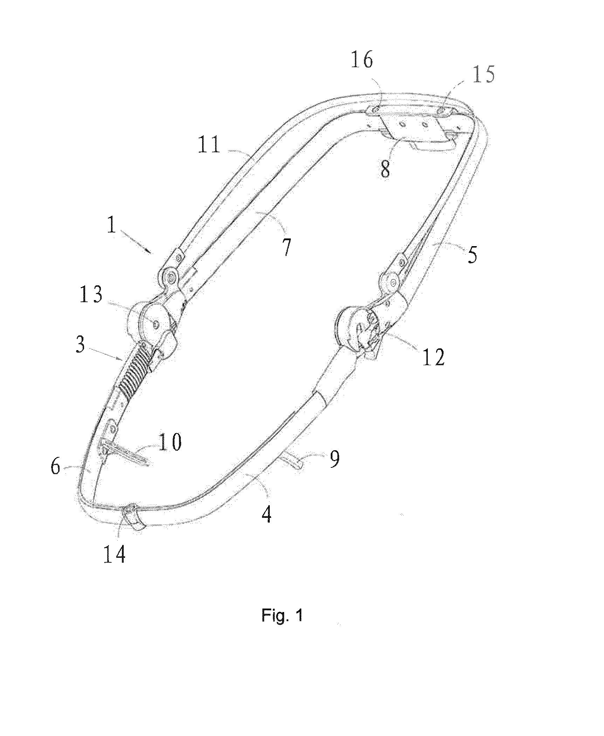

Fig.1 is a perspective drawing of a seat pocket frame of the invention, wherein the seat pocket frame is in an unfolded position;

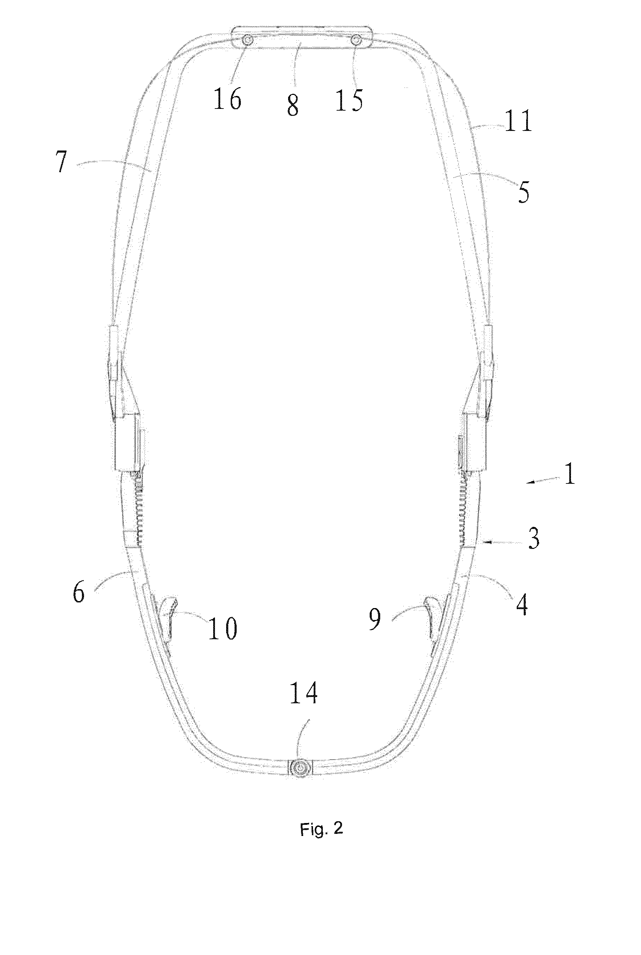

Fig.2 is a front view of the seat pocket frame of the invention, wherein the seat pocket frame is in an unfolded position;

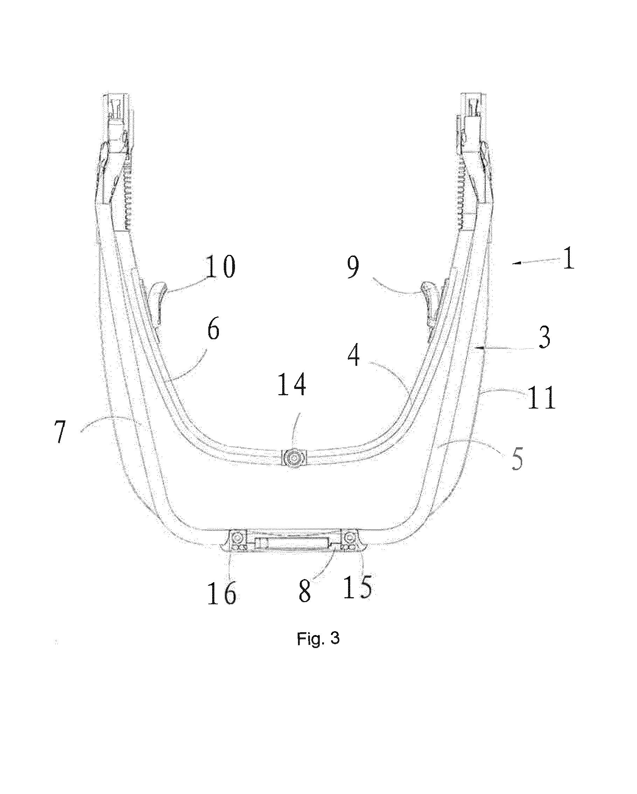

Fig.3 is a front view of the seat pocket frame of the invention, wherein the seat pocket frame is in the course of converting between an unfolded position and a folded position.

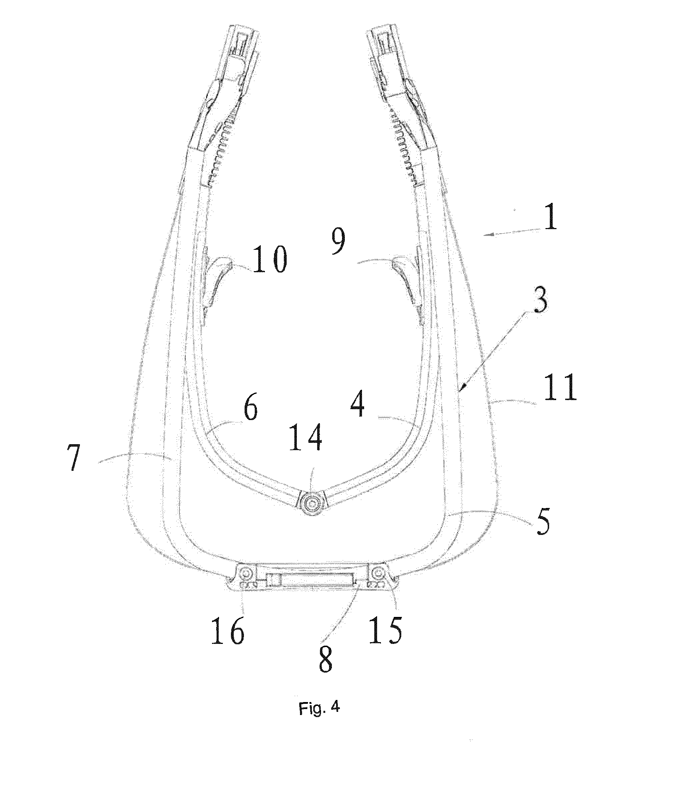

Fig.4 is a front view of the seat pocket frame of the invention, wherein the seat pocket frame is in a folded position;
Fig.5 is a right side view of the seat pocket frame of the invention, wherein the seat pocket frame is in an unfolded position; and

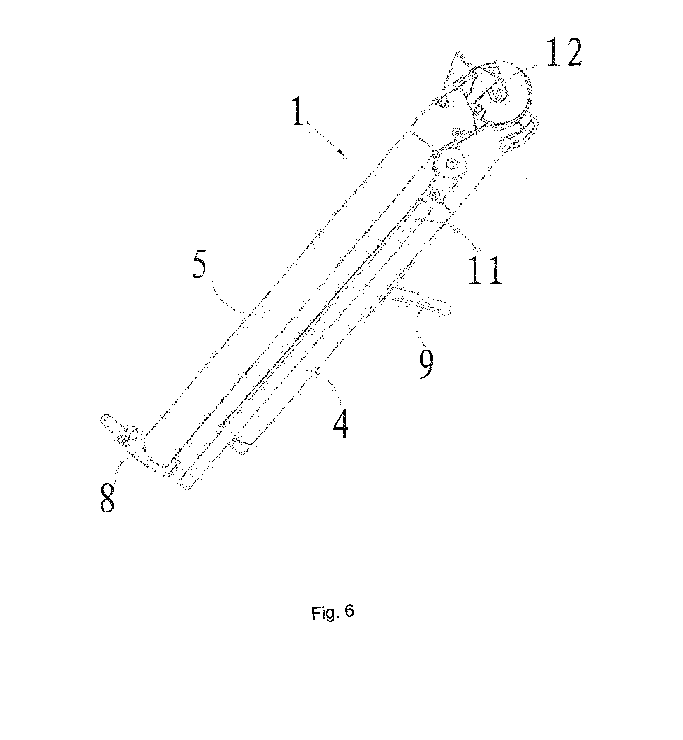

Fig. 6 is a right side view of the seat pocket frame of the invention, wherein the seat pocket frame is in a folded position.
wherein: 1. a seat pocket frame; 2. a seat cloth cover; 3. a frame; 4. a left lower bracket; 5. a left upper bracket; 6. a right lower bracket; 7. a right upper bracket; 8. an upper connecting member; 9. a left seat rod; 10. a right seat rod; 11. a awning rod frame; 12; a left first shaft; 13. a right first shaft; 14. a second shaft; 15. a third shaft; 16. a fourth shaft.

### Description of the Preferred Embodiments

The invention will be further illustrated in more detail with reference to accompanying drawings.

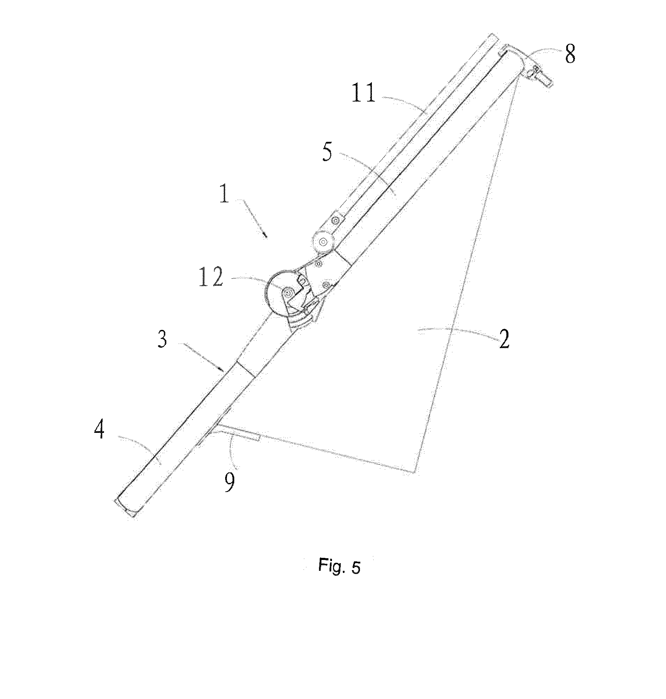

As shown in fig.s, a seat pocket assembly comprises a seat pocket frame 1 having an unfolding position and a folding position, a seat cloth cover 2 disposed on the seat pocket frame 1, and a locking mechanism for locking the seat pocket frame 1 when it is in the unfolding position. The seat cloth cover 2 is as shown in fig. 5.

The seat pocket frame 1 comprises a frame 3 which forms a closed frame-shaped structure when the seat pocket frame 1 is in the unfolded position. the seat pocket frame 1 comprises a left lower bracket 4 at a left side thereof, a left upper bracket 5 with a proximal end being rotatably connected with a proximal end of the left lower bracket 4 by a left first shaft 12, a right lower bracket 6 at a right side thereof, and a right upper bracket 7 with a proximal end being rotatably connected with a proximal end of the right lower bracket 6 by a right first shaft 13. A distal end of the left lower bracket 4 is rotatably connected with a distal end of the right lower bracket 6, and a distal end of the left upper bracket 5 is rotatably connected with a distal end of the right upper bracket 7.

The axis of the left first shaft 12 and the axis of the right first shaft 13 respectively extend in a left-right direction. When the seat pocket frame 1 is in the folding position, the distal ends of the left lower bracket 4 and the left upper bracket 5 draw close to each other, the distal ends of the right lower bracket 6 and right upper bracket 7 draw close to each other, and the left first shaft 12 and the right first shaft 13 draw close to each other.

Preferably, the axes of the left first shaft 12 and the right first shaft 13 coincide.

The distal end of the left lower bracket 4 is rotatably connected with the distal end of the right lower bracket 6. In this embodiment, the distal end of the left lower bracket 4 is rotatably connected with the distal end of the right lower bracket 6 by a second shaft 14, and the left first shaft 12 and the right first shaft 13 respectively are spatially perpendicular to the second shaft 14. Similarly, it is possible that the left lower bracket 4 and the right lower bracket 6 are rotatably connected with each other by an intermediate part as mentioned hereinafter. The distal ends of the left upper bracket 5 and the right upper bracket 7 are rotatably connected with each other by an intermediate part. In this embodiment, the frame 3 also comprises an upper connecting member 8, the distal end of the left upper bracket 5 is rotatably connected with one end of the upper connecting member 8 by a third shaft 15, the distal end of the right upper bracket 7 is rotataly connected with the other end of the upper connecting member 8 by a fourth shaft 16, and the left first shaft 12 and the right first shaft 13 respectively are spatially perpendicular to the third shaft 15 and the fourth shaft 16. In this embodiment, only one upper connecting member 8 is provided, however, it is possible that two upper connecting members 8 are provided, and the left upper bracket 5, two upper connecting members 8 and the right upper bracket 7 are rotatably connected with each other in sequence. Or alternatively, it is also possible that the distal ends of the left upper bracket 5 and the right upper bracket 7 are pivotally connected with each other by a rotation shaft directly.

The seat pocket frame 1 further comprises a left seat rod 9 with one end being fixed on the left lower bracket 4 and a right seat rod 10 with one end being fixed on the right lower bracket 6.When the seat pocket frame 1 is in the unfolded position, the left seat rod 9 extends backwards from the left lower bracket 4 and the right seat rod 10 extends backwards from the right lower bracket 6. The seat cloth cover 2 comprises a seat portion located on the left seat rod 9 and the right seat rod 10.

The locking mechanism comprises a left locking mechanism arranged on the proximal end of the left lower bracket 4 and the proximal end of the left upper bracket 5, and a right locking mechanism arranged on the proximal end of the right lower bracket 6 and the proximal end of the right upper bracket 7. The specific structures of the left and right locking mechanisms do not refer to the main technical points of the invention, and any locking configurations which can lock two rotation parts with each other are applicable herein. For example, a first locking groove is opened on the proximal end of the left lower bracket 4 spaced apart from the first shaft 12, and a first locking block is slidably disposed on the proximal end of the left upper bracket 5, and when the first locking lock is inserted into the first locking groove, the left lower bracket 4 is locked with the left upper bracket 5.

The above seat pocket assembly can be used alone, or mounted on a bracket of a children product to form a whole children product, such as a baby carriage, the carriage comprises a carriage frame and a plurality of wheel assemblies arranged at the bottom of the carriage frame, and the seat pocket assembly is detachably disposed on the carriage frame. There exist various specific detaching ways, and they do not refer to the main technical points of the invention, and thus will not be further described in more detail herein. Furthermore, the seat pocket assembly also can be disposed on a baby seat, a baby rocking chair or the like.

The above embodiments are described for illustrating the technical concept and features of invention, the aim is intended to enable a person skilled in the art to appreciate the content of the invention and further implement it, and the protecting scope of the invention can not be limited hereby. Also, any equivalent variations or modifications made according to the spirit of the invention should be covered within the protecting scope of the invention.

## Claims

1. A seat pocket assembly for carrying baby, comprising a foldable seat pocket frame (1), a seat cloth cover disposed on the seat pocket frame (1), and a locking mechanism for locking the seat pocket frame (1) when the frame is unfolded, the seat pocket frame (1) comprising a frame (3) which forms a closed frame-shaped structure when the seat pocket frame (1) is unfolded, wherein the frame (3) comprises:
A left lower bracket (4) at a left side of the frame (3), which has a proximal end and a distal end;
A left upper bracket (5) at the left side of the frame (3), which has a proximal end and a distal end, the proximal end of the left upper bracket (5) being rotatably connected with the proximal end of the left lower bracket (4) by a left first shaft (12), left first shaft (12) having an axis extending in a left-right direction, the distal end of the left lower bracket (4) and the distal end of the left upper bracket (5) drawing close to each other when the seat pocket frame (1) is folded;
A right lower bracket (6) at a right side of the frame (3), which has a proximal end and a distal end, the distal end of the right lower bracket (6) being rotatably connected with the distal end of the left lower bracket (4); and
A right upper bracket (7) at the right side of the frame (3), which has a proximal end and a distal end, the proximal end of the right upper bracket (7) being rotatably connected with the proximal end of the right lower bracket (6) by a right first shaft (13), the right first shaft (13) having an axis extending in a left-right direction, and the distal end of the right upper bracket (7) being rotatably connected with the distal end of the left upper bracket (5) directly or undirectly, when the seat pocket frame (1) is folded, the distal end of the right lower bracket (6) and the distal end of the right upper bracket (7) draw close to each other and the left first shaft (12) and the right first shaft (13) draw close to each other.

2. The seat pocket assembly as claimed in claim 1, wherein the axis of the left first shaft (12) and the axis of the right fist shaft (13) are coaxial.

3. The seat pocket assembly as claimed in claim 1, wherein the distal end of the left lower bracket (4) is rotatably connected with the distal end of the right lower bracket (6) by a second shaft (14), the second shaft (14) having an axis being spatially perpendicular to the axis of the left first shaft (12) and the axis of the right first shaft (13) respectively.

4. The seat pocket assembly as claimed in claim 1, wherein the distal end of the left upper bracket (5) is connected with the distal end of the right upper bracket (7) by a upper connecting member (8), the left upper bracket (5) being rotatably connected to one end of the upper connecting member (8) by a third shaft (15), the right upper bracket (7) being rotatably connected with the other end of the upper connecting member (8) by a fourth shaft (16), and left first shaft (12) and the right first shaft (13) respectively being spatially perpendicular to the third shaft (15) and the fourth shaft (16).

5. The seat pocket assembly as claimed in claim 1, wherein the seat pocket frame (1) further comprises a left seat rod (9) with one end being fixed on the left lower bracket (4) and a right seat rod (10) with one end being fixed on the right lower bracket (6), the left seat rod (9) and the right seat rod (9) being configured in such a way that when the seat pocket frame (1) is unfolded, the left seat rod (9) extends backwards from the left lower bracket (4) and the right seat rod (10) extends backwards from the right lower bracket (6).

6. The seat pocket assembly as claimed in claim 5, wherein the seat cloth cover (2) comprises a seat portion located on the left seat rod (9) and the right seat rod (10).

7. The seat pocket assembly as claimed in claim 1, wherein the locking mechanism comprises a left locking mechanism arranged on the proximal end of the left lower bracket (4) and the proximal end of the left upper bracket (5), and a right locking mechanism arranged on the proximal end of the right lower bracket (6) and the proximal end of the right upper bracket (7).

8. A baby carriage using the seat pocket assembly as claimed in anyone of claims 1-7, wherein the baby carriage comprises a carriage frame and a plurality of wheel assemblies arranged at the bottom of the carriage frame, the seat pocket assembly being detachably disposed on the carriage frame.
